# EUROPÄISCHE PATENTSCHRIFT

(11) **EP 3 552 993 B1**
(45) Veröffentlichungstag und Bekanntmachung des Hinweises auf die Patenterteilung: **16.12.2020**
(21) Anmeldenummer: 19167117.1
(22) Anmeldetag: 03.04.2019
(51) Int. Cl.: B65G 47/14

(54) **VEREINZELUNGSMASCHINE**
SEPARATION MACHINE
MACHINE DE SÉPARATION

(30) Priorität: 12.04.2018 DE 102018108730
(43) Veröffentlichungstag der Anmeldung: 16.10.2019
(73) Patentinhaber: Dornieden Anlagentechnik GmbH, 48727 Billerbeck (DE)
(72) Erfinder: Börger, Markus, 48356 Nordwalde (DE); Obst, Günter, 48329 Havixbeck (DE)
(74) Vertreter: Dr. Träger & Strautmann PAe PartG mbB

(56) Entgegenhaltungen:
- EP-A1- 1 847 482
- BE-A- 470 115
- US-A- 3 815 730

## Beschreibung

Die Erfindung bezieht sich auf eine Vorrichtung zur Vereinzelung von lang gestreckten Profilen, wie beispielsweise Stangen, Drähten oder Rohren, umfassend
- eine drehbar gelagerte Trommel, an welchem wenigstens eine Öffnung vorgesehen ist,
- sowie wenigstens ein Verschlusselement, welches die Öffnung verschließt und freigibt,
- wenigstens einen an den Trommelmantel gekoppelten oder in den Trommelmantel integrierten Mitnehmer zur Selektion einer einzelnen Stange.

Die Trommel der erfindungsgemäßen Vorrichtung weist einen Trommelmantel auf, der zylindrisch oder polygonal sein kann.

Eine Selektion eines einzelnen Profils aus einer größeren Menge, beispielsweise einem Bund, ist erforderlich, wenn dieses Profil einzeln, beispielsweise auf einer Drehmaschine, bearbeitet werden soll.

Aus DE 20 29 304 C2 ist eine Vorrichtung zum Ausrichten, Trennen und einzeln Abgeben von länglichen Kleinteilen, mit einer um eine horizontale Achse drehbaren Schöpftrommel zur Aufnahme eines Vorratshaufens von Kleinteilen bekannt. Die Vorrichtung weist eine derartige Drehgeschwindigkeit auf, welche einem von der Trommel mitgerissenen Kleinteil eine Zentrifugalkraft erteilt, die größer ist als dessen Schwerkraft. Die Trommel weist im Inneren über mindestens einem Teil des Umfangs ein Profil auf, durch das die Kleinteile mit ihrer Längshauptrichtung auf die Längsausrichtung der Trommel ausgerichtet werden.

Am Grund des Profils ist eine als Schöpfelement für je ein Kleinteil dienende Vertiefung angeordnet, die, während sie unter dem Kleinteilhaufen durchläuft, ein Kleinteil aus dem Haufen aufnehmen kann. Die Vertiefung mündet in einen Kanal, der durch den Trommelmantel ungefähr tangential in Trommeldrehrichtung nach außen mündet. Die Vorrichtung verfügt über einen Verschluss für den Kanal. Nachteilig bei der bekannten Vorrichtung ist, dass sie lediglich für Werkstücke, wie Bolzen oder Schrauben vorgesehen ist und für längere Werkstücke, wie Profilstäbe auf Grund der ungünstigen Geometrie der Kanalmündung nicht geeignet ist.

Solche Trommeln sind jedoch für die Selektion von Kleinteilen vorgesehen und zur Selektion langer Profile ungeeignet.

Bei bekannten Vereinzelungsvorrichtung für langgestreckte Profile werden die Profile in einem Magazin beziehungsweise auf einem Lagerständer abgelegt und von dort über eine Zuführrutsche einzeln an eine nachgelagerte Bearbeitungsmaschine übergeben. Ebenfalls zur Selektion von Stangen- oder wellenförmigen Bauteilen kann ein sogenannter Pilgertisch oder eine Kammvereinzelung vorgesehen sein.

Je dünner die Profile sind, desto eher verhaken sie jedoch ineinander und führen zu Störungen im Fertigungsprozess. Insbesondere wenn der Profildurchmesser kleiner als 10 mm ist, kann es zu Störungen im Ablauf kommen, die manuelle Eingriffe erfordern.

US 3 815 730 A offenbart eine Vorrichtung nach dem Oberbegriff des Anspruchs 1.

Es stellt sich daher die Aufgabe, eine neuartige Vorrichtung zu konzipieren, mit welcher die Vereinzelung von länglichen Profilelementen, wie Profilstäben oder Stangen, in einfacher Weise ermöglicht ist.

Die vorgenannte Aufgabe ist mit einer Vorrichtung zur Vereinzelung von länglichen Profilen mit Merkmalen des Anspruchs 1 gelöst.

Weitere technisch vorteilhafte Weiterbildungen sind in den Unteransprüchen beschrieben.

Mit der Vorrichtung gemäß Erfindung sind Langprofile verschiedenster Art vereinzelbar. Bei den Profilen kann es sich um volle Rundstäbe oder -stangen oder um Mehrkantprofile handeln. Die Profile können auch dünne Werkstücke, wie Kapillarröhrchen oder Hohlnadel (Kanüle) für Einwegspritzen sein. Die zu vereinzelnden Langprofile werden im Folgenden auch als "Stangen" bezeichnet.

In einer ersten Ausführungsform umfasst die Vereinzelungsvorrichtung eine drehbar gelagerte Trommel mit einem Innenraum und einem zylindrischen Trommelmantel, an welchem wenigstens eine Öffnung vorgesehen ist. Weiterhin ist wenigstens ein Verschlusselement vorgesehen, welches aus einer Schließposition in eine Offenposition bewegbar ist und die Öffnung verschließt und freigibt. Im Innenraum der Trommel ist wenigstens ein an den Trommelmantel gekoppelter Mitnehmer zur Selektion einer einzelnen Stange vorgesehen. Ein außerhalb der Trommel angeordneter Tragrahmen trägt eine in der Trommel befindliche, schräg gestellte Abrollbahn. Die Abrollbahn dreht sich somit bei Rotation der Trommel nicht mit, sondern behält vielmehr ihre Position im Innenraum der Trommel bei. Die Trommel ist in eine Auswurfposition drehbar, in welcher eine vom Mitnehmer selektierte Stange der Abrollbahn zuführbar ist, wobei das Verschlusselement sich in Offenposition befindet und gemeinsam mit der Abrollbahn eine Leiteinrichtung zum Auswurf der Stange durch die Öffnung der Trommel bildet.

Die ortsfest angeordnete Abrollbahn kann - in längsaxialer Seitenansicht auf die Trommel - konvex, konkav, vorzugsweise eben sein. Als Abrollbahn soll grundsätzlich eine Fläche verstanden werden, über welche eine Stange bergab rollen und/oder gleiten kann.

Die von der Vorrichtung vereinzelten Stangen werden vorzugsweise einer nachgeordneten weiteren Bearbeitungsmaschine, beispielsweise einer Drehmaschine, zugeführt. Besonders vorteilhaft ist, dass die im Innenraum der Trommel befindlichen Stangen, welche bei Rotation der Trommel schwerkraftbeding am tiefsten Punkt des Trommel-Innenraums angeordnet sind, sich durch die Rotation der Trommel in Längsrichtung ausrichten. Während bei im Stand der Technik bekannten Zuführrutschen ein auf der Zuführrutsche befindliches Stangenbündel kaum bewegt und sich einzelne Stangen des Bündels somit ineinander verhaken können, versetzt die Rotation der Trommel die Stangen am Trommelgrund in Bewegung, wodurch sich eventuell aneinander haftende Stangen voneinander lösen und sich in Längsrichtung ausrichten.

Die Größe der Vorrichtung, insbesondere die Trommellänge bzw. Trommeldurchmesser kann in sehr großen Bereich variieren. So können die Trommeln eine Nutzlänge zwischen 0,05 Meter und 10 Meter, abhängig von der Länge des Stangenmaterials, aufweisen. Selbstverständlich können unterschiedliche Typengrößen der Trommel abhängig von den Ausmaßen des Stangenbündels vorgesehen sein. Kleinere Trommeln dienen zur Vereinzelung von sehr dünnen Stangen oder Kapillarröhrchen, größere Trommeln dienen in der Regel zur Selektion von Stangen mit größeren Durchmessern.

Überraschenderweise sind die erfindungsgemäßen Vorrichtungen besonders gut zur Selektion von sehr dünnen, einen Durchmesser von weniger als 10mm aufweisenden, und gleichzeitig sehr langen, beispielsweise 6 Meter langen, Stangen geeignet. Ein bevorzugtes Einsatzgebiet der Vorrichtung ist deshalb dort angesiedelt, wo metallverarbeitende Betriebe aus von einem Stahlwerk zugelieferten 6-Meter-Stangenmaterial dünnwandige Kanülen herstellen. Selbstverständlich ist die erfindungsgemäße Vorrichtung nicht nur in der metallverarbeitenden Industrie, sondern auch in anderen Industriezweigen, beispielsweise zur Vereinzelung von Kunststoffstangen, einsetzbar.

Die Stangen sind auf verschiedene Art und Weise entweder durch eine in einer Trommelseitenwand befindliche oder durch eine im Trommelmantel befindliche Öffnung in den Innenraum der Trommel förderbar. In einer bevorzugten Ausführung der Vorrichtung ist die Trommel in eine spezielle Befüllposition drehbar, in welcher eine oder mehrere Stangen bei in geöffnetem Verschlusselement durch die im Trommelmantel befindliche Öffnung in den Innenraum zuführbar sind. Die Befüllposition der Trommel kann in der oberen Hälfte, vorzugsweise - in Drehrichtung der Trommel gesehen - kurz vor dem Zenitbereich eines durch den Trommelumfang definierten Kreises liegen.

Dieselbe Öffnung im Trommelmantel dient somit bei in Auswurfposition befindlicher Trommel zum Auswurf einzelner Stangen und bei in Befüllposition befindlicher Trommel zur Befüllung der Trommel. Um die Effizienz des Gesamtablaufs zu optimieren sind Befüll- und Auswurfposition der Trommel vorzugsweise um ca. 100° bis 180° versetzt zueinander angeordnet. Das heißt: Die Stangen gelangen von einer Seite in die Trommel hinein und einer im Wesentlichen gegenüberliegenden Seite aus der Trommel heraus. Das Stangen-Vorratslager ist dann beispielsweise hinter der Trommel und eine Vorrichtung zur Aufnahme der vereinzelten Stangen vor der Trommel angeordnet. Hierdurch ergibt sich ein raumsparender Aufbau der Gesamtmaschine.

Der Leiteinrichtung, über welche die Stangen aus dem Trommelinnenraum herausgefördert werden, kann eine Wippe oder Rutsche nachgeschaltet sein. Die Wippe kann, bezogen auf eine längsaxiale Seitenansicht auf die Trommel, trog- bzw. V-förmig sein, wobei ihre Schwenkachse im tiefsten Punkt der Wippe liegt. In eine solche Wippe kann die einzelne Stange fallen und durch das Schwenken der Wippe weiter befördert werden. Vorzugsweise ist die Schwenkbewegung der Wippe mit der Drehbewegung der Trommel synchronisiert.

Das Verschlusselement zum Verschließen der Trommel ist vorzugsweise als schwenkbare Öffnungsklappe ausgeführt, deren Schwenkachse mantellinienartig längs des Trommelmantels verläuft.

Die Öffnungsklappe kann eben sein. Vorzugsweise ist sie jedoch an die Kontur der Trommel angepasst und stellt ein Segment des zylindrischen Trommelmantels dar.

Vorzugsweise ist das Verschlusselement, beziehungsweise die Öffnungsklappe, nur ins Innere der Trommel schwenkbar. Die Schwenkbewegung nach außen kann durch entsprechende Gestaltung der aufeinanderstoßenden Längskanten der Öffnungsklappe und der Öffnung des Trommelmantels blockiert werden. Die Schwenkbewegung erfolgt vorzugsweise allein schwerkraftbedingt. Dies hat den Vorteil, dass zur Betätigung keine zusätzlichen Antriebe benötigt werden. Allerdings kann ein Antrieb für die Trommel vorgesehen sein um beispielsweise die Öffnungsgeschwindigkeit zu erhöhen.

Oberhalb oder gegenüber der Auswurfposition der Trommel kann eine Beschickungsstation zur Aufnahme und Weitergabe einzelner Stangen oder eines Stangenbündels über die Öffnung in den Innenraum der Trommel angeordnet sein.

Vorzugsweise umfasst die Beschickungsstation einen entlang der Trommel verlaufenden Trichter, eine Einfüllrutsche oder wenigstens eine seitlich begrenzte, entlang der Trommel verlaufende Leiste, so dass die Stangen allein durch die Schwerkraft in die Trommel fallen können. Zwei voneinander beabstandete Leisten können ein Vorratslager für die Stangen bilden.

Die Beschickungsstation kann wenigstens ein verschiebbares oder schwenkbares Bodenelement umfassen, dessen Freigabe das Befüllen der Trommel beispielsweise mit einer Stangencharge ermöglicht.

Bei dem Mitnehmer zur Selektion einer einzelnen Stange kann es sich um einen an eine Innenwand der Trommel befestigten Profilstab, beispielsweise einen drei- oder Vierkantstab, vorzugsweise einen Rundstab handeln.

Der Mitnehmer zur Selektion einer einzelnen Stange ist vorzugsweise auswechselbar oder einstellbar, so dass bei Drehung der Trommel in Auswurfposition nur eine einzelne Stange vom Mitnehmer gehalten wird und andere zunächst vom Mitnehmer mitgenommener Stangen sich vor Erreichen der Auswurfposition vom Mitnehmer lösen.

Darüber hinaus kann der Profilstab auch einen kombinierten, beispielsweise einen teils konkaven und teils runden Profilquerschnitt aufweisen. Dabei kann die einzelne Stange durch das konkave Teil des Profilstabes gehalten werden.

Die Einstellbarkeit des Profilstabes kann durch seine Drehung bzw. Drehjustierung verwirklicht werden, falls der Profilstab an entsprechenden, an der Innenwand der Trommel angeordneten jochartigen Halterungen gehalten ist. Es kann aber auch eine Haltevorrichtung für den Profilstab vorgesehen sein, mittels derer die Höhe und/oder die Ausrichtung des Profilstabes einstellbar ist.

Der Mitnehmer zur Selektion der Stangen kann auch in einem Materialstück zusammen mit der Trommel ausgeführt sein. Dies betrifft insbesondere Trommeln, die grundsätzlich lediglich eine bestimmte Sorte von Profilen selektieren sollen und bei denen insofern ein Umrüsten auf andere Profile nicht erforderlich ist.

Die freie Längskante der Öffnungsklappe und/oder wenigstens die schräg nach unten zeigende Kante der Abrollbahn können so gestaltet sein, dass sie sich miteinander verzahnen bzw. ineinander greifen, so dass sie in der als Auswurfposition vorgesehene Lage der Trommel eine gemeinsame Fläche, beziehungsweise Abrollbahn und damit eine Leiteinrichtung für eine aus der Trommel herausrollende Stange bilden.

Zu diesem Zweck können die Öffnungsklappe zum Verschließen des Trommelmantels und die Abrollbahn im Inneren der Trommel wenigstens teilweise kammartig ausgebildet sein. Durch die ineinandergreifenden kammartigen Strukturen wird vermieden, dass in Auswurfposition ein Spalt zwischen Abrollbahn und Öffnungsklappe verbleibt, durch den dünne Profile hindurchfallen oder in dem sie sich beim herausrollen verhaken könnten.

Die Trommel kann zum Zwecke der Gewichtsenkung und zur Entfernung von Schmutzpartikeln wenigstens teilweise sieb- oder gitterartig ausgebildet bzw. perforiert sein, so dass die Schmutzpartikel und/oder andere unerwünschten Kleinteile über die bestehenden Maschen nach außen gelangen und Reinigungsarbeiten in der Trommel ersparen können. Die Trommel kann somit auch gleichzeitig als Waschtrommel genutzt werden.

Die Trommel kann zusätzlich zu der bereits beschriebenen Elementen, nämlich der Öffnung, dem Verschlusselement und dem Mitnehmer, wenigstens eine weitere Öffnung, ein weiteres Verschlusselement und einen weiteren Mitnehmer umfassen, welche so angeordnet sind, dass bei einer Umdrehung der Trommel nach Selektion einer ersten Stange wenigstens eine weitere Stange selektierbar ist. Die Vorrichtung kann somit eine oder mehrere, beispielsweise zwei oder drei gleichmäßig am Trommelmantel verteilte Öffnungen zum Befüllen und Auswerfen von Profilen umfassen, welche jeweils mit einem Verschlusselement zu öffnen und zu verschließen sind. So können beispielsweise nacheinander zwei Profile bei der Drehung jeweils um 1800 oder drei Profile bei der Drehung jeweils um 1200 ausgeworfen werden.

Die Erfindung wird nachstehend als Beispiel beschrieben und in den Figuren dargestellt. Die Figuren zeigen:
- Fig. 1: eine Vorrichtung gemäß Erfindung in einer perspektivischen Ansicht;
- Fig. 2: die Vorrichtung gemäß Fig. 1 in einer perspektivischen Schnittdarstellung mit Blick in den Innenraum der Trommel;
- Fig. 3: die Vorrichtung gemäß Fig. 1 in einer Seitenansicht in Schnittdarstellung;
- Fig. 4: die schematische Darstellung einer Trommelrotation mit Darstellung der Trommel in acht Drehpositionen a bis h und hiermit verbundener Vereinzelung einer einzelnen Stange;
- Fig. 5a bis 5e:: die Vereinzelung einer Stange in vergrößerten Detailansichten "v", "w", "x", "y", "z" gemäß Fig. 4;
- Fig. 6: eine Trommel in einer perspektivischen Ansicht;
- Fig. 7: eine vergrößerte Darstellung der in Fig. 4 gezeigten Trommelposition h;
- Fig. 8: eine schematische Darstellung einer alternativen Ausführungsform mit einer Vieleck-Trommel;
- Fig. 9: die Vielecktrommel gemäß Fig. 8 in Auswurfposition.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

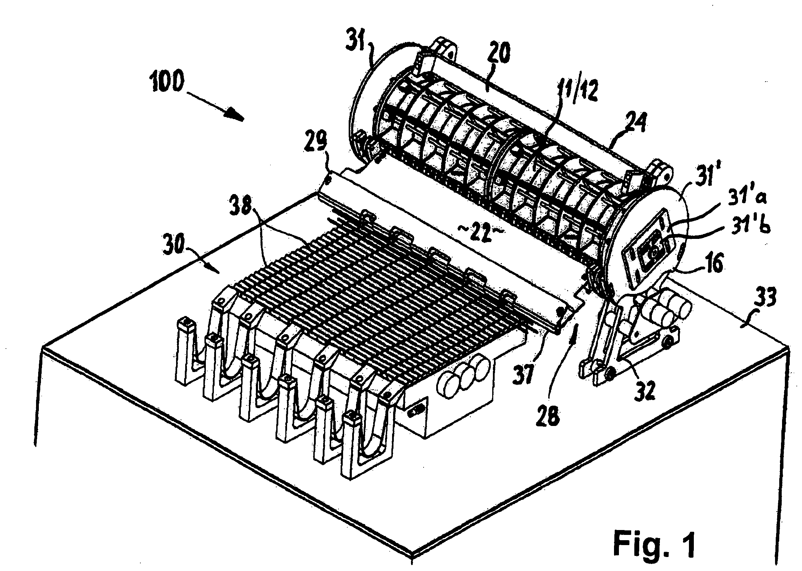

Eine in den Figuren 1, 2 und 3 dargestellte Vorrichtung 100 zur Vereinzelung von länglichen Profilen oder Werkstücken, die im Folgenden als Stangen 10 bezeichnet werden, setzt sich im Wesentlichen aus folgenden Teilen zusammen:
- einem Tragrahmen 16,
- einer an dem Tragrahmen 16 waagerecht gelagerten Trommel 11 mit einem Innenraum 40 und einem Trommelmantel 12, an welchem eine Öffnung 14 eingebracht ist,
- einer innerhalb der Trommel 11 schräg angeordneten Abrollbahn 17, welche am Tragrahmen 16 ortsfest angebracht ist und bei Rotation der Trommel (10) nicht mitrotiert,
- einem Verschlusselement 13,
- einer Beschickungsstation 20,
- einer Auswurfstation 28,
- und einer Entnahmestation 30.

Der Tragrahmen 16 umfasst zwei seitliche Deckel 31, 31', welche jeweils mit einem Gestell 32 verbunden sind. Die beiden Gestelle 32 ruhen auf einem Podest 33. Die seitlichen Deckel 31, 31' umfassen zusätzliche Deckelteile. In Figur 1 sind die zusätzlichen Deckelteile 31'a und 31'b des Deckels 31' sichtbar. Auch der Deckel 31 hat entsprechende Deckelteile, die aber in Figur 1 verdeckt sind. Mittels der zusätzlichen Deckelteile kann die Position und die Neigung der Abrollbahn 17 variiert werden.

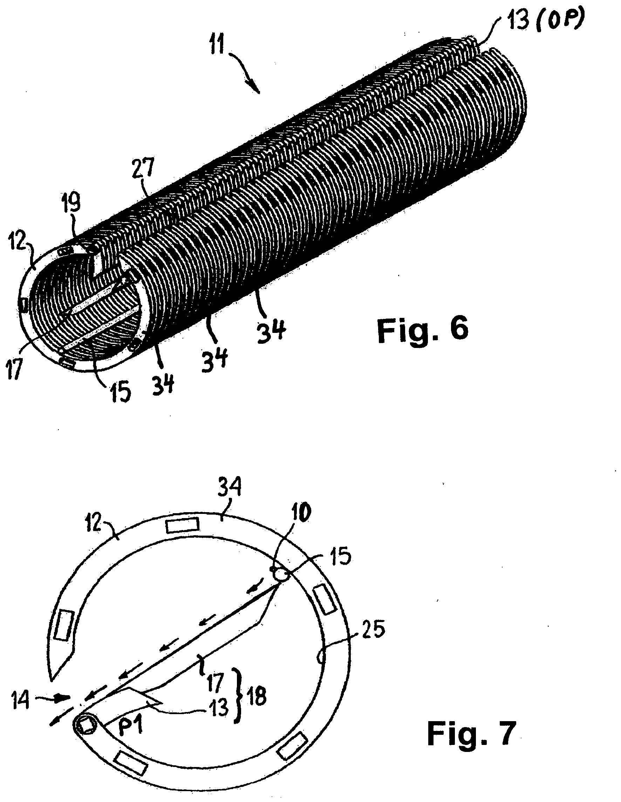

Die Trommel 11 besteht aus einer Vielzahl von voneinander beabstandeten und an Befestigungsleisten 35 aufgereihten Flachringen 34 (vgl. Fig. 6), welche einen tubusartigen Hohlkörper bilden, an dessen Innenwand 25 ein sich über die ganze Trommellänge erstreckender, rundstabförmiger Mitnehmer 15 befestigt ist. Hierdurch erhält die Trommel eine siebartige Struktur. Darüber hinaus lässt sich bei Herstellung der Trommel 11 durch die Anzahl oder den Abstand der aufgereihten Flachringen 34 die Trommellänge einfach variieren.

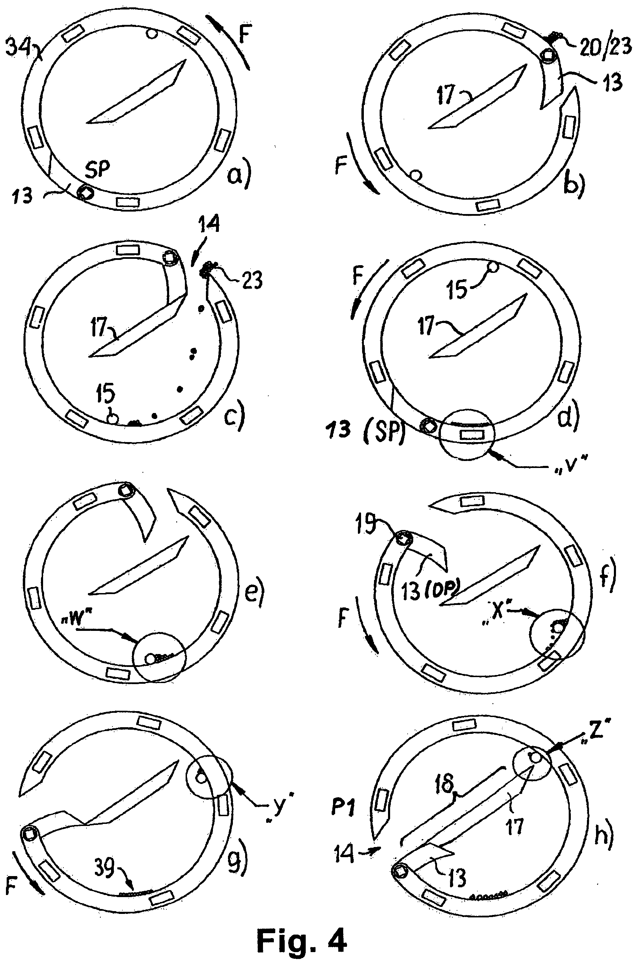

Das Verschlusselement 13 ist als Teilbereich des Trommelmantels 12 ausgebildet und verschließt in Schließposition SP den Innenraum 40. In Offenposition OP gibt das Verschlusselement 13 die Öffnung 14 frei. Der Wechsel des Verschlusselements 13 aus der Offenposition OP in die Schließposition SP und umgekehrt erfolgt im dargestellten Ausführungsbeispiel bei Drehung der Trommel 11 schwerkraftbedingt und ohne zusätzlichen Antrieb (vgl. Figuren 4, 6 und 7). Alternativ oder ergänzend zu einem schwerkraftbedingten Wechsel von Offenposition und Schließposition kann aber auch ein separater Antrieb vorgesehen zu sein um beispielsweise das Öffnen und Schließen in anderen Drehpositionen der Trommel oder mit größerer Geschwindigkeit zu ermöglichen.

Das Verschlusselement 13 ist in Form einer um eine Schwenkachse 19 drehbaren und sich ebenso über die ganze Trommellänge erstreckenden Öffnungsklappe 21 ausgeführt. Das Öffnen und Schließen der Öffnungsklappe 21 erfolgt im dargestellten Ausführungsbeispiel auf Schwerkraftbasis, das heißt: zur Betätigung der Öffnungsklappe 21 ist kein zusätzlicher Antrieb erforderlich.

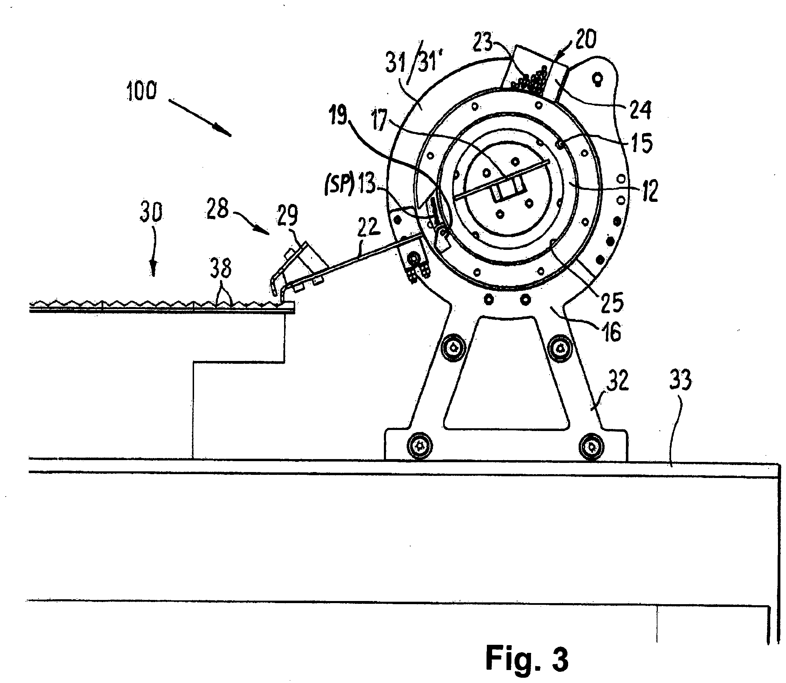

Die Beschickungsstation 20 in ihrer einfachsten Form wird durch eine bzw. zwei seitlich begrenzte Leisten 24 ausgebildet, welche eine Charge (Stangenbündel 23, vgl. Fig. 3) aufnehmen können. Die Leisten 24 sind an den Deckeln 31, 31' derart befestigt, dass sie über den Trommelmantel 12 gleiten. Trifft die Öffnung 14 - bei der Drehung der Trommel 11 - auf die Beschickungsstation 20, fällt automatisch, schwerkraftbedingt das ganze Stangenbündel 23 über diese Öffnung 14 in die Trommel 11 hinein. Alternativ zur dargestellten Beschickungsstation 20 sind auch andere Beschickungseinrichtung einsetzbar.

Im dargestellten Ausführungsbeispiel weist die innerhalb der Trommel 11 liegende Abrollbahn 17 mehrere in Richtung der Auswurfstation 28 zeigende, kammartige Spalten oder Einkerbungen 26 auf, welche - bei dem in einer Auswurfposition P1 (vgl. Fig. 7) befindlichen Verschlusselement 13 - mit entsprechenden Einkerbungen 27 des Verschlusselementes 13 (Öffnungsklappe 21) ineinandergreifen und damit eine Leiteinrichtung 18 zum Auswurf einer vereinzelten Stange 10 durch die Öffnung 14 bilden.

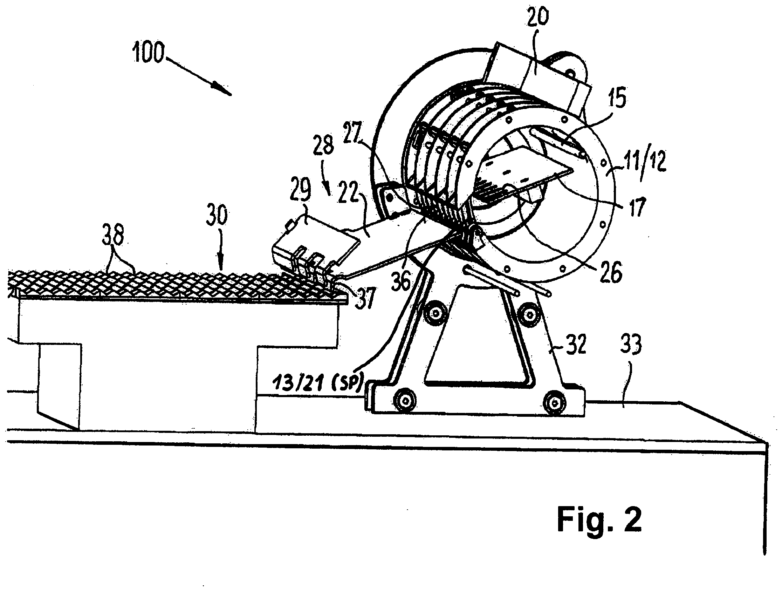

Die Auswurfstation 28 umfasst eine Rutsche 22, welche mit ihrer einen Kante 36 nahezu in die Öffnung 14 der Trommel 11 greift und sich mit ihrer gegenüber liegenden Biegekante 37 (vgl. Fig. 2) an der Entnahmestation 30 abstützt, sowie eine im Bereich der Biegekante 37 liegende Schwenkklappe 29. Die Rutsche 22 ist etwa planparallel zur Abrollbahn 17 oder unterhalb der Abrollbahn angeordnet und ist gegenüber der Abrollbahn 17 etwas abgesenkt, so dass die bergab rollenden oder gleitenden Profile von der Leiteinrichtung 18 direkt auf die Rutsche 22 fallen und weiter befördert werden können.

Bei der Entnahmestation 30 handelt es sich um einen Bandförderer oder Entnahmetisch, welcher eine Verlängerung der Rutsche 22 darstellt. Im vorliegenden Fall weist die Entnahmestation 30 eine Vielzahl von die Profile (Stangen 10) aufzunehmenden Vertiefungen 38 auf.

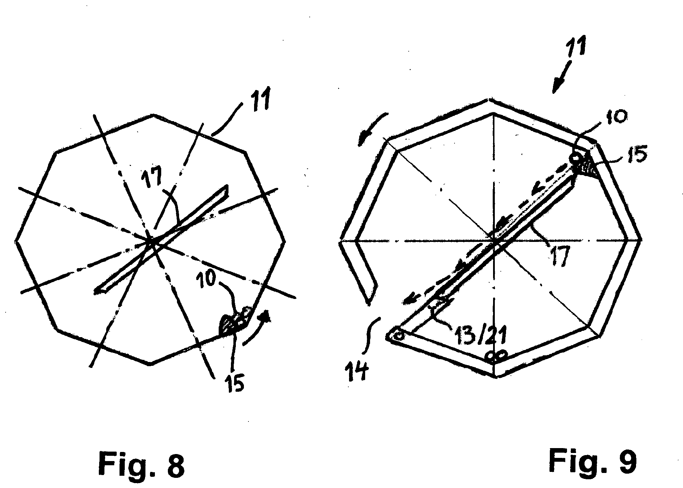

Die Figuren 8 und 9 zeigen eine alternative Ausführung einer Trommel 11. Diese weist an Stelle eines kreisrunden Innenraums eine vieleckige, im dargestellten Ausführungsbeispiel: achteckige, Kontur auf. Hierdurch kann bei bestimmten Einsatzbedingungen das Ausrichten der Stangen 10 am Grund der Trommel 11 begünstigt werden.

Als Beispiel für eine andere Profilierung eines Mitnehmers 15 ist eine dreieckige Mitnehmerkontur vorgesehen. Selbstverständlich können auch runde Trommeln mit dreieckigen Mitnehmern oder vieleckige Trommel mit runden Mitnehmern ausgerüstet werden. Die konstruktive Ausgestaltung von Trommel- und Mitnehmerkontur erfolgt in Abhängigkeit von den jeweiligen Einsatzanforderungen.

### Funktionsweise (in Verbindung mit Figuren 3, 4, 5 und 7)

Bei der Funktionsbeschreibung wird nur eine Charge berücksichtigt.

In die Beschickungsstation 20 (vgl. Fig. 3) wird ein Stangenbündel 23 lose eingelegt und die unbeladene Trommel 11 mit Hilfe eines manuell betätigbaren oder ferngesteuerten Elektroantriebs in Drehung versetzt. Alternativ hierzu kann auch eine V-Mulde oder eine Vorvereinzelung vorgesehen sein.

Mit dem Pfeil F ist die Drehrichtung der Trommel 11 bezeichnet. Das Verschlusselement 13 befindet sich in einer Schließposition SP. Dieser Zustand entspricht der Fig. 4 (Drehphase a).

Nach einer Drehung um etwa 150° schwenkt das Verschlusselement 13 automatisch infolge der Schwerkraft zum Inneren der Trommel 11 und gibt die Öffnung 14 frei. Zunächst bildet sich ein kleiner Öffnungsspalt, der sich bei fortgesetzter Drehbewegung (Drehphase b zu Drehphase c) zunehmend vergrößert und schließlich die Öffnung 14 komplett freigibt. Die Trommel befindet sich somit in Befüllposition P2 und das Verschlusselement 13 in Offenposition OP. Soweit die Beschickungsstation 20 mit einem Stangenvorrat belegt ist, kann der Stangevorrat in dieser Befüllposition P2 in den durch die Öffnung 14 in die Trommel 11 gelangen. Das Stangenmaterial fällt somit in die Trommel 11 hinein und sammelt sich in ihrem unteren Teil.

Drehphase c zeigt weiterhin, dass der Mitnehmer 15 sich bei in Befüllposition P2 befindlicher Trommel nahezu an seiner tiefsten Position befindet. In Abhängigkeit von der Art und Weise, wie die Stangen 10 in die Trommel 11 hineinfallen, nimmt der Mitnehmer 15 im günstigen Fall eine Stange 10 unmittelbar mit. Im ungünstigen Fall ist eine Umdrehung um 360° erforderlich, so dass der Mitnehmer 15 die erste Stange 10 erst bei dem der Befüllung nachfolgenden Trommelumlauf erfasst.

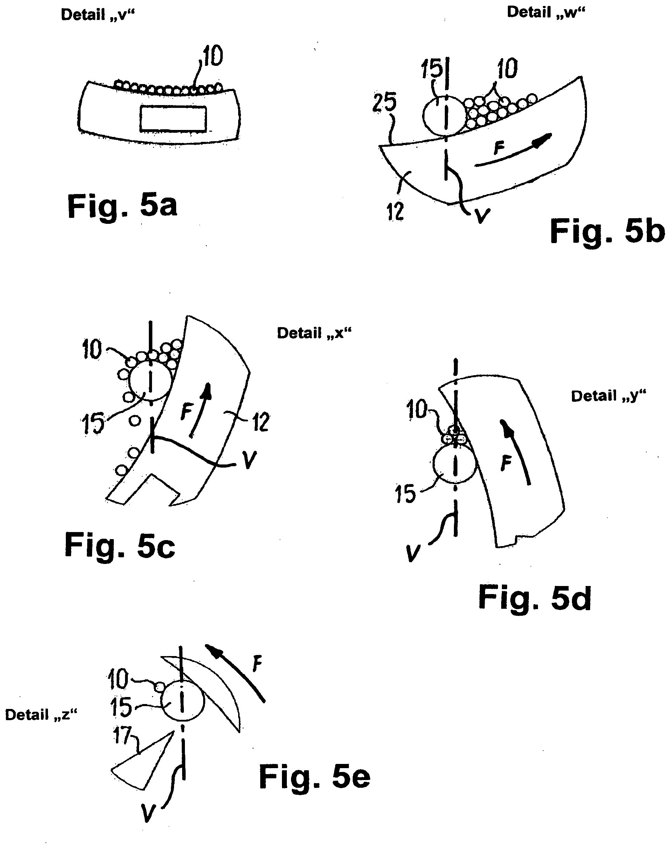

Diese Situation ist in Drehphase 4d dargestellt. Die Trommel 11 hat sich um 360° gedreht. Das Verschlusselement 13 befindet sich in Schließposition SP. Die Trommel 11 ist jedoch beladen, wie es das Detail "v" und seine Vergrößerung gemäß Fig. 5a zeigen. Der Mitnehmer 15 erreicht nahezu eine Zenitlage und hat keinen Kontakt mit den Stangen 10.

Bei Fortsetzung der Drehbewegung von Drehphase d über Drehphase e in Drehphase f hat der Mitnehmer 15 zuerst seine unterste Lage (Detail "w" und Fig. 5b) eingenommen, drückt gegen die angesammelten Stangen 10 und bewegt diese in Drehrichtung F, bis der Mitnehmer 15 eine Lage einnimmt, bei der er nicht alle Stangen 10 zu halten vermag. Einige Stangen 10 fallen gleitend über den Mitnehmer 15 nach unten, wie es das Detail "x" mit zugehöriger Vergrößerung gemäß Fig. 5c zeigt. Gleichzeitig hat sich das Verschlusselement 13 wiederum aus der Schließposition SP in die Offenposition OP bewegt und ist nach innen verschwenkt. Ein nicht näher dargestellter Anschlag begrenzt die Offenposition des Verschlusselementes 13.

Bei einer weiteren Drehung werden zunächst noch drei Stangen 10 vom Mitnehmer 15 gehalten (Drehphasen g, Fig. 5d). Der Mitnehmer 15 ist so dimensioniert, dass bis zum Erreichen der Auswurfposition P1 alle Stangen 10 bis auf die zu selektierende letzte Stange 10 wieder zurück auf den Trommelboden fallen. In Auswurfposition P1 wird somit nur noch eine Stange 10 vom Mitnehmer 15 gehalten, wie es die Details "y" (Drehphase g) und "z" (Drehphase h) und Figur 5e zeigen. Die restlichen Stangen 10 bilden eine unten liegende Stangenschicht 39 aus.

In Drehphase h ist das die Einkerbungen 27 aufweisende Verschlusselement 13 maximal ins Innere der Trommel 11 geschwenkt. Die Einkerbungen 26 des Verschlusselements 13 und die Einkerbungen 27 der Abrollbahn 17 greifen ineinander, so dass Verschlusselement 13 Abrollbahn 17 gemeinsam die bereits erwähnte Leiteinrichtung 18 ausbilden. In Auswurfposition P1 kann nunmehr auch die letzte vom Mitnehmer 15 bis hierher gehaltene Stange 10 vom Mitnehmer 15 ab auf die Leiteinrichtung 18 und gelangt über die Öffnung 14 auf die Rutsche 22.

Bei Fortsetzung der Drehbewegung wird das Verschlusselement 13 durch seine Gewichtskraft und durch das Stangenbündel in die Schließposition SP heruntergedrückt und schließt die Trommel 11.

Nachfolgend wird bei jeder weiteren Trommelumdrehung eine Stange 10 selektiert und aus der Trommel herausgefördert bis auch die letzte Stange 10 aus der Stangenschicht 39 durch den Mitnehmer 10 auf die Leiteinrichtung 18 ausgeworfen ist.

Bei Bedarf und zur Sicherung eines kontinuierlichen Prozesses kann zwischenzeitlich jedoch neues Stangenmaterial über die Beschickungsstation 20 zugeführt werden. Hierdurch kann ein insgesamt kontinuierlicher Prozess sichergestellt werden.

**Bezugszeichenliste:**

| | | | |
|---|---|---|---|
| 10 | Profil (Stange) | 34 | Flachring |
| 11 | Trommel | 35 | Befestigungsleiste (Fig. 6) |
| 12 | Trommelmantel | 36 | Kante (von 22) |
| 13 | Verschlusselement | 37 | Biegekante (von 22) |
| 14 | Öffnung | 38 | Vertiefung |
| 15 | Mitnehmer | 39 | Stangenschicht |
| 16 | Tragrahmen | 40 | Innenraum (von 11) |
| 17 | Abrollbahn | | |
| 18 | Leiteinrichtung | 100 | Vorrichtung |
| 19 | Schwenkachse | | |
| 20 | Beschickungsstation | a bis h | Drehphase der Trommel |
| 21 | Öffnungsklappe | | |
| 22 | Rutsche | F | Pfeil (Drehrichtung) |
| 23 | Stangenbündel | | |
| 24 | Leiste | P1 | Auswurfposition (der Trommel) |
| 25 | Innenwand | P2 | Befüllposition (der Trommel) |
| 26 | Einkerbungen | SP | Schließposition (von 13) |
| 27 | Einkerbungen | OP | Offenposition (von 13) |
| 28 | Auswurfstation | V | Vertikalachse |
| 29 | Schwenkklappe | | |
| 30 | Entnahmestation | | |
| 31, 31' | Deckel | | |
| 31'a | Deckelteil | | |
| 31'b | Deckelteil | | |
| 32 | Gestell | | |
| 33 | Podest | | |

## Patentansprüche

1. Vorrichtung (100) zur Vereinzelung von lang gestreckten Profilen, wie Stangen (10), umfassend
- eine drehbar gelagerte Trommel (11) mit einem Innenraum (40) und einem zylindrischen oder polygonalen Trommelmantel (12), an welchem wenigstens eine Öffnung (14) vorgesehen ist,
- sowie wenigstens ein Verschlusselement (13), welches aus einer Schließposition (SP) in eine Offenposition (OP) bewegbar ist und die Öffnung (14) verschließt und freigibt,
- wenigstens einen an den Trommelmantel (12) gekoppelten oder in den Trommelmantel (12) integrierten Mitnehmer (15) zur Selektion einer einzelnen Stange (10),
wobei ein außerhalb der Trommel (11) angeordneter Tragrahmen (16) vorgesehen ist, welcher eine in der Trommel (11) befindliche, schräg gestellte Abrollbahn (17) trägt und die Trommel (11) in eine Auswurfposition (P1) drehbar ist, in welcher eine vom Mitnehmer (15) selektierte Stange (10) der Abrollbahn (17) zuführbar ist,
**dadurch gekennzeichnet, dass** das Verschlusselement (13) sich in Offenposition (OP) befindet und gemeinsam mit der Abrollbahn (17) eine Leiteinrichtung (18) zum Auswurf der Stange (10) durch die Öffnung (14) bildet.

2. Vorrichtung (100) nach Anspruch 1, **dadurch gekennzeichnet, dass** die Trommel (11) in eine Befüllposition (P2) drehbar ist, in welcher eine oder mehrere Stangen (10) bei in Offenposition (OP) befindlichem Verschlusselement (13) durch die Öffnung (14) in den Innenraum (40) zuführbar sind.

3. Vorrichtung (100) nach einem der Ansprüche 1 oder 2, **dadurch gekennzeichnet, dass** der Leiteinrichtung (18) eine Wippe oder Rutsche (22) oder ein anderes Fördermittel nachgeschaltet ist.

4. Vorrichtung (100) nach einem der Ansprüche 1 bis 3, **dadurch gekennzeichnet, dass** das Verschlusselement (13) als schwenkbare Öffnungsklappe (21) ausgeführt ist, deren Schwenkachse (19) mantellinienartig längs des Trommelmantels (12) verläuft.

5. Vorrichtung (100) nach einem der Ansprüche 1 bis 4, **dadurch gekennzeichnet, dass** an oder oberhalb der Trommel (11) eine Beschickungsstation (20) zur Aufnahme und Weitergabe einzelner Stangen (10) oder eines Stangenbündels (23) über die Öffnung (14) in den Innenraum (40) der Trommel (11) angeordnet ist.

6. Vorrichtung (100) nach Anspruch 5, **dadurch gekennzeichnet, dass** die Beschickungsstation (20) einen entlang der Trommel (11) verlaufenden Trichter, eine Einfüllrutsche oder wenigstens eine seitlich begrenzte Leiste (24) umfasst.

7. Vorrichtung (100) nach einem der Ansprüche 1 bis 6, **dadurch gekennzeichnet, dass** der Mitnehmer (15) zur Selektion einer einzelnen Stange (10) ein an eine Innenwand (25) der Trommel (11) befestigter Profilstab, wie Drei- oder Vierkantstab, vorzugsweise ein Rundstab ist.

8. Vorrichtung (100) nach einem der Ansprüche 1 bis 7, **dadurch gekennzeichnet, dass** der Mitnehmer (15) zur Selektion einer einzelnen Stange (10) auswechselbar oder einstellbar ist, so dass bei Drehung der Trommel (11) in Auswurfposition (P1) nur eine einzelne Stange (10) vom Mitnehmer (15) gehalten wird und andere zunächst vom Mitnehmer (15) mitgenommenen Stangen (10) sich vor Erreichen der Auswurfposition (P1) vom Mitnehmer (15) lösen.

9. Vorrichtung (100) nach einem der Ansprüche 1 bis 7, **dadurch gekennzeichnet, dass** der Mitnehmer (15) zur Selektion der Stangen (10) in einem Materialstück zusammen mit der Trommel (11) ausgeführt ist.

10. Vorrichtung (100) nach einem der Ansprüche 1 bis 9, **dadurch gekennzeichnet, dass** die Trommel (11) und/oder die Öffnungsklappe (21) und/oder die Abrollbahn (17) wenigstens teilweise kammartig ausgebildet ist.

11. Vorrichtung (100) nach Anspruch 10, **dadurch gekennzeichnet, dass** die Abrollbahn (17) und die Öffnungsklappe (21) - in der Auswurfposition (P1) und/oder in der Befüllposition (P2) der Trommel (11) - mit ihren kammartigen Einkerbungen (26; 27) ineinandergreifen.

12. Vorrichtung (100) nach einem der Ansprüche 1 bis 11, **dadurch gekennzeichnet, dass** die Trommel (11) wenigstens teilweise sieb- oder gitterartig ausgebildet bzw. perforiert sein kann.

13. Vorrichtung (100) nach einem der Ansprüche 1 bis 12, **dadurch gekennzeichnet, dass** die Trommel zusätzlich zu Öffnung (14), dem Verschlusselement (13) und dem Mitnehmer (15) wenigstens eine weitere Öffnung, ein weiteres Verschlusselement und einen weiteren Mitnehmer umfasst, die so angeordnet sind, dass bei einer Umdrehung der Trommel (11) nach Selektion einer ersten Stange (10) wenigstens eine weitere Stange (10) selektierbar ist.

## Claims

1. Device (100) for the separation of elongated structural sections, such as bars (10), comprising
- a rotatably mounted drum (11) with an interior (40) and a cylindrical or polygonal drum shell (12) on which at least one opening (14) is provided,
- and with at least one closure element (13) which can be moved from a closed position (SP) into an open position (OP) and which closes and releases the opening (14),
- at least one driver (15) coupled to the drum shell (12) or integrated into the drum shell (12) for selecting a single bar (10),
wherein a supporting frame (16) arranged outside the drum (11) is provided, which supporting frame (16) bears an inclined roll-off track (17) located in the drum (11) and the drum (11) can be rotated into an ejection position (P1) in which a bar (10) selected by the driver (15) can be fed to the roll-off track (17), **characterized in that** the closure element (13) is in the open position (OP) and together with the roll-off track (17) forms a guiding device (18) for ejecting the bar (10) through the opening (14).

2. The device (100) as claimed in claim 1, **characterized in that** the drum (11) can be rotated into a filling position (P2) in which one or more bars (10) can be fed through the opening (14) into the interior (40) when the closure element (13) is in the open position (OP).

3. The device (100) as claimed in one of the claims 1 or 2, **characterized in that** a rocker or slide (22) or another conveying means is connected downstream of the guiding device (18).

4. The device (100) as claimed in one of the claims 1 to 3, **characterized in that** the closure element (13) is designed as a pivotable opening flap (21), the pivot axis (19) of which runs along the drum shell (12) in the manner of a generatrix.

5. The device (100) as claimed in one of the claims 1 to 4, **characterized in that** a charging station (20) is arranged on or above the drum (11) for receiving and transferring individual bars (10) or a bundle of bars (23) via the opening (14) into the interior (40) of the drum (11).

6. The device (100) as claimed in claim 5, **characterized in that** the charging station (20) comprises a hopper running along the drum (11), a filling chute or at least one laterally delimited strip (24).

7. The device (100) as claimed in one of the claims 1 to 6, **characterized in that** the driver (15) for selecting a single bar (10) is a profile bar, such as a triangular or square bar, preferably a round bar, attached to an inner wall (25) of the drum (11).

8. The device (100) as claimed in one of the claims 1 to 7, **characterized in that** the driver (15) for selecting a single bar (10) is exchangeable or adjustable, so that when the drum (11) rotates to the ejection position (P1) only a single bar (10) is held by the driver (15) and other bars (10) initially carried by the driver (15) are released from the driver (15) before reaching the ejection position (P1).

9. The device (100) as claimed in one of the claims 1 to 7, **characterized in that** the driver (15) for selecting the bars (10) is realized in one piece of material along with the drum (11).

10. The device (100) as claimed in one of the claims 1 to 9, **characterized in that** the drum (11) and/or the opening flap (21) and/or the roll-off track (17) is configured to be at least partially comb-like.

11. The device (100) as claimed in claim 10, **characterized in that** the roll-off track (17) and the opening flap (21) - in the ejection position (P1) and/or in the filling position (P2) of the drum (11) - mesh with their comb-like notches (26; 27).

12. The device (100) as claimed in one of the claims 1 to 11, **characterized in that** the drum (11) can be at least partially screen-like or grid-like or perforated.

13. The device (100) as claimed in one of the claims 1 to 12, **characterized in that** the drum comprises, in addition to the opening (14), the closure element (13) and the driver (15), at least one further opening, a further closure element and a further driver, which are arranged such that during one revolution of the drum (11) after the selection of a first bar (10), at least one further bar (10) can be selected.

## Revendications

1. Dispositif (100) pour séparer des profilés étirés en longueur, tels que des tiges (10), comprenant :
- un tambour (11) supporté de manière rotative, avec un espace intérieur (40) et une enveloppe de tambour (12) cylindrique ou polygonale au niveau de laquelle est prévue au moins une ouverture (14),
- ainsi qu'au moins un élément de fermeture (13) qui peut être déplacé d'une position de fermeture (SP) à une position d'ouverture (OP) et qui ferme et ouvre l'ouverture (14),
- au moins un dispositif d'entraînement (15) accouplé à l'enveloppe de tambour (12) ou intégré dans l'enveloppe de tambour (12), pour sélectionner une tige individuelle (10),
un cadre porteur (16) disposé à l'extérieur du tambour (11) étant prévu, lequel porte une voie de roulement (17) placée obliquement, se trouvant dans le tambour (11), et le tambour (11) pouvant tourner dans une position d'éjection (P1) dans laquelle une tige (10) sélectionnée par le dispositif d'entraînement (15) peut être acheminée à la voie de roulement (17), **caractérisé en ce que** l'élément de fermeture (13) se trouve dans la position d'ouverture (OP) et forme conjointement avec la voie de roulement (17) un système directeur (18) pour éjecter la tige (10) à travers l'ouverture (14).

2. Dispositif (100) selon la revendication 1, **caractérisé en ce que** le tambour (11) peut tourner dans une position de remplissage (P2) dans laquelle une ou plusieurs tiges (10) peuvent être acheminées à travers l'ouverture (14) dans l'espace intérieur (40) lorsque l'élément de fermeture (13) se trouve dans la position d'ouverture (OP).

3. Dispositif (100) selon l'une quelconque des revendications 1 et 2, **caractérisé en ce qu'**une bascule ou une glissière (22) ou un autre moyen de transport est monté(e) après le système directeur (18).

4. Dispositif (100) selon l'une quelconque des revendications 1 à 3, **caractérisé en ce que** l'élément de fermeture (13) est réalisé sous forme de clapet d'ouverture pivotant (21) dont l'axe de pivotement (19) s'étend à la manière d'une ligne d'enveloppe le long de l'enveloppe de tambour (12).

5. Dispositif (100) selon l'une quelconque des revendications 1 à 4, **caractérisé en ce qu'**un poste d'alimentation (20) pour recevoir et transférer des tiges individuelles (10) ou un faisceau de tiges (23) par le biais de l'ouverture (14) dans l'espace intérieur (40) du tambour (11) est disposé sur le tambour (11) ou au-dessus de celui-ci.

6. Dispositif (100) selon la revendication 5, **caractérisé en ce que** le poste d'alimentation (20) comprend une trémie s'étendant le long du tambour (11), une glissière de remplissage ou au moins une baguette (24) limitée latéralement.

7. Dispositif (100) selon l'une quelconque des revendications 1 à 6, **caractérisé en ce que** le dispositif d'entraînement (15) pour sélectionner une tige individuelle (10) est une barre profilée fixée à une paroi intérieure (25) du tambour (11), telle qu'une barre triangulaire ou carrée, de préférence une barre ronde.

8. Dispositif (100) selon l'une quelconque des revendications 1 à 7, **caractérisé en ce que** le dispositif d'entraînement (15) pour sélectionner une tige individuelle (10) peut être interchangé ou ajusté de telle sorte que lors de la rotation du tambour (11) dans la position d'éjection (P1), seulement une tige individuelle (10) soit retenue par le dispositif d'entraînement (15) et que d'autres tiges (10) entraînées en même temps initialement par le dispositif d'entraînement (15) se détachent du dispositif d'entraînement (15) avant d'atteindre la position d'éjection (P1).

9. Dispositif (100) selon l'une quelconque des revendications 1 à 7, **caractérisé en ce que** le dispositif d'entraînement (15) pour sélectionner les tiges (10) est réalisé dans une pièce de matériau conjointement avec le tambour (11).

10. Dispositif (100) selon l'une quelconque des revendications 1 à 9, **caractérisé en ce que** le tambour (11) et/ou le clapet d'ouverture (21) et/ou la voie de roulement (17) sont réalisés au moins en partie en forme de peigne.

11. Dispositif (100) selon la revendication 10, **caractérisé en ce que** la voie de roulement (17) et le clapet d'ouverture (21), dans la position d'éjection (P1) et/ou dans la position de remplissage (P2) du tambour (11), s'engagent l'un dans l'autre avec leurs entailles en forme de peigne (26 ; 27).

12. Dispositif (100) selon l'une quelconque des revendications 1 à 11, **caractérisé en ce que** le tambour (11) peut être réalisé au moins en partie en forme de tamis ou en forme de grille ou peut être perforé.

13. Dispositif (100) selon l'une quelconque des revendications 1 à 12, **caractérisé en ce que** le tambour, en plus de l'ouverture (14), de l'élément de fermeture (13) et du dispositif d'entraînement (15), comprend au moins une ouverture supplémentaire, un élément de fermeture supplémentaire et un dispositif d'entraînement supplémentaire qui sont disposés de telle sorte que dans le cas d'une rotation du tambour (11) après la sélection d'une première tige (10), au moins une tige supplémentaire (10) puisse être sélectionnée.
